Europäisches Patentamt

European Patent Office

Office européen des brevets

(19)

(11) Publication number: **0 102 511**

**A1**

(12)

# EUROPEAN PATENT APPLICATION

(21) Application number: **83107387.9**

(22) Date of filing: **27.07.83**

(51) Int. Cl.³: **F 16 H 19/00**

(30) Priority: **08.09.82 US 415861**

(43) Date of publication of application:
**14.03.84 Bulletin 84/11**

(84) Designated Contracting States:
**DE FR GB IT**

(71) Applicant: **International Business Machines
Corporation
Old Orchard Road
Armonk, N.Y. 10504(US)**

(72) Inventor: **Coles, Richard Dennis
Wynhurst The Square
Prinsted Emsworth Hampshire(GB)**

(72) Inventor: **Larcombe, Arthur Charles
5 Maston Crescent
Rowner Gosport Hampshire(GB)**

(72) Inventor: **Worthington, Geoffrey
Rose Cottage Bepton
Midhurst Sussex(GB)**

(74) Representative: **Cimberle, Andrea
IBM Italia S.p.A. Direzione Brevetti MI-SEG-555 P.O. Box
137
I-20090 Segrate (Milano)(IT)**

(54) Linear actuator of the rack and pinion type and method of minimizing friction and wear therein.

(57) A pinion (10) carried by a motor housing (17) is resiliently pivoted by a bias spring (22) in one direction to mesh fully with the teeth (11) of a rack (12) when the reaction between them is small. A roller follower (30) normally spaced a preselectable slight distance X from a smooth opposite surface (34) of the rack (12) and carried by the housing (17) is rocked into contact with said smooth surface (34) in response to the reaction between the pinion (10) and rack (12) to define a position in which the pitch lines of pinion (10) and rack (12) substantially match in order to minimize friction and wear therebetween and yet achieve high resolution at the end of each actuator stroke.

FIG. 1

Linear actuator of the rack and pinion type and method of minimizing friction and wear therein

This invention relates to a linear actuator of the rack and pinion type and a method of minimizing friction and wear therein.

Various arrangements have heretofore been proposed for eliminating clearance and increasing traction between components in a mechanical drive system. In drive systems of the rack and pinion and the rail and roller types, it is known to spring bias the pinion into intimate contact with the rack or bias the roller into contact with the rail, as the case may be, for this stated purpose.

One of suck known drive systems is shown in U.S. Patent 3,563,179 which discloses a drive wheel in contact with the upper surface of a smooth monorail, and a spring-biased traction-increasing pressure roll in contact with the smooth undersurface of the rail.

Another known drive system is shown in U.S. Patent 3,176,628 which discloses a load, in the nature of a gondola, suspended from and supported by two rollers that contact the upper surface of a smooth monorail. A drive wheel carried by the load contacts a smooth undersurface of the monorail so that as the tractive effort applied to move the load along the monorail increases, the drive wheel will impose a bigger bite on said undersurface to increase the traction.

A disadvantage of such known drive systems is that, as the amount of bias increases, friction and hence wear of the drive components progressively increase as they are moved relative to each other.

The invention as claimed is intended to overcome the above disadvantage in drive systems of the rack and pinion type. It solves the problem of maintaining an adequate bias between rack and pinion while minimizing the friction when they move relative to each other.

- 2 -

The invention allows precise positioning, high speed and low wear in linear actuators of the rack and pinion type. It is particularly useful in apparatus such as robotic devices and in other apparatus where speeds are high and accuracy is required at end of stroke.

One way of carrying out the invention is described in detail below with reference to drawings, in which:

Figure 1 is a side elevational view, partly cut away for clarity, of a high resolution linear actuator embodying the invention,

Figure 2 is a partial section taken along the line 2-2 of Figure 1.

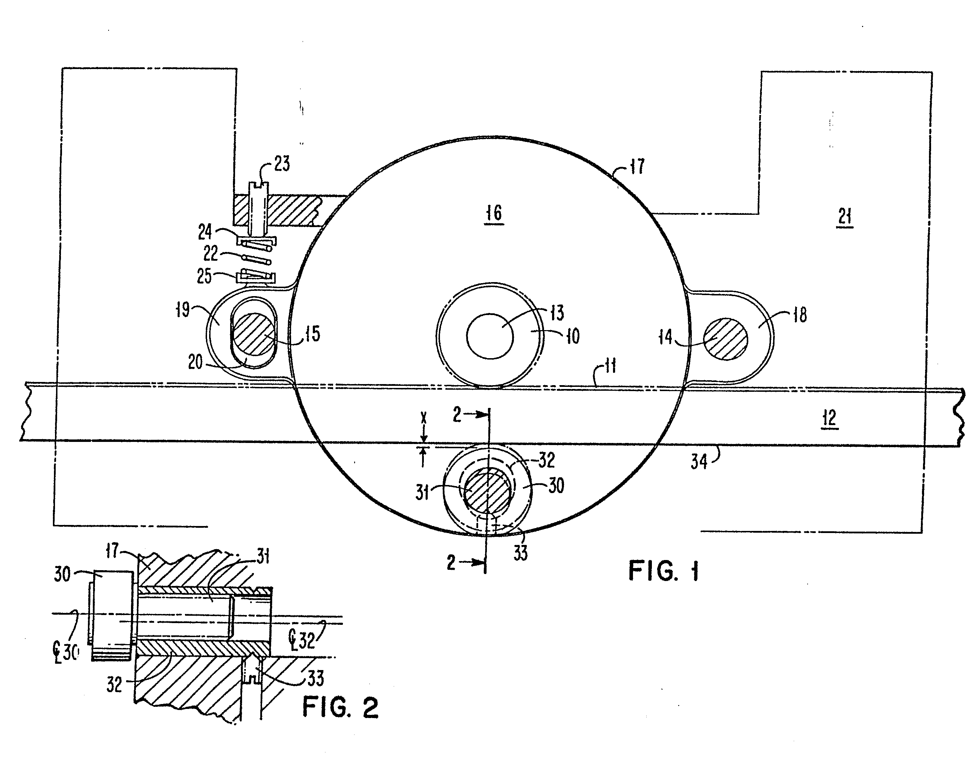

As illustrated in Figure 1, a linear actuator embodying the invention comprises a pinion 10 that meshes with teeth 11 on a rack 12. Pinion 10 is carried by a shaft 13. Two shafts 14 and 15 are disposed on opposite sides of the pinion 10 above teeth 11. Shaft 13 is the drive shaft of a motor 16 having a housing 17, part of which are lobes 18, 19. Shaft 14 extends through lobe 18 to form a pivot for housing 17. Shaft 15 is accommodated in a slot 20 in lobe 19. Shafts 14, 15 are supported by a fixed member 21 which also carries a linear bearing system (not shown). A helical bias spring 22 pivots the housing 17 and hence pinion 10 counterclockwise, as viewed in figure 1, relative to shaft 14. The bias force of spring 22 is preferably adjustable by any suitable means, such as a screw 23 carried by fixed member 21 and acting through cup 24 on the spring in retainer cup 25. This adjustment allows the user to optimize and set the dynamic load which determines whether the pinion 10 and rack teeth 11 are fully meshed or running on the pitch line.

A roller follower 30 is provided which is freely rotatable on a shaft 31. As best shown in Figure 2, shaft 31 projects into and is fixed to the bore of eccentric 32 which can be adjustably rotated in housing 17 and locked by screw 33. Correct adjustment is when the roller 30 is in contact with the back (smooth) face 34 of rack 12 and the pitch lines of the rack teeth 11 and pinion 10 are coincident.

- 3 -

When pinion 10 and rack 12 are stationary, the actuator will assume the rest position in which it is shown in Fig. 1. In this position, housing 17 will be pivoted counterclockwise about shaft 14 by spring 22, causing pinion 10 to fully mesh with rack teeth 11, eliminating all clearance, and follower 30 will be spaced a preselected distance X from smooth surface 34. However, when pinion 10 is driven by motor 16, the reaction between the pinion and rack 12 will tend to force them apart. Except under conditions of light dynamic load, this reaction will be sufficient to cause the follower 30 to move through the distance X and make rolling contact with the smooth surface 34 of the rack, to define an operating position. This operating position is preselected to correspond to that at which the pitch lines of pinion 10 and rack 12 match, for thus desirably minimizing friction and wear. Note that, by rotation of eccentric member 32, the distance X may be very precisely adjusted to insure that these pitch lines match.

It should be noted that the rack 12 need not be straight; if desired, it may be curved provided the distance between the teeth 11 and smooth surface 34 is maintained constant. Also, in the actuator as illustrated, the pinion 10 is rotated to move the rack 12 linearly. If desired, however, the rack 12 and its supporting members (not shown) can be held stationary and member 21 (complete with motor 16, housing 17, pinion 10, spring 22, etc.) can move along the rack in either direction with the same advantages of high resolution and low wear and friction.

Actuator positional information may be taken from a transducer attached to shaft 13 or a separate device which is not dependent upon rack-tooth pitch accuracy.

Claims:

1. A linear actuator including a rack (12) having teeth (11) in one face, a pinion (10) that is resiliently pivoted by bias means (22) into engagement with the teeth (11) of the rack (12), and follower means (30) supported in a constant spaced relationship relative to the pinion (10) characterized in that said follower means (30) is spaced a preselected distance (X) from a surface (34) of the rack (12) opposite the teeth (11) when the pinion (10) and the rack (12) are at rest, but pivotally movable into engagement with said surface (34) during relative movement of said pinion (10) and rack (12), to a position in which the pitch lines of the pinion and rack substantially coincide.

2. A linear actuator according to claim 1, wherein the follower means (30) is rotatable and makes rolling contact with said surface (34) and said surface (34) is substantially smooth.

3. A linear actuator according to claim 1 or 2, including pivotally supported housing means (17) carrying said pinion (10) and follower means (30).

4. A linear actuator according to claim 3, wherein said housing means (17) is resiliently pivoted by said bias means (22).

5. A linear actuator according to claim 3 or 4,, wherein said housing means (17) carries a motor (16) for driving the pinion (10) relative to the rack (12) and supports said pinion (10) and follower means (30) with their axes in constant spaced parallel relationship.

6. A linear actuator according to any preceeding claim, including adjusting means (32, 33) for adjusting said preselected distance (X).

7. A linear actuator according to claim 5, wherein said adjusting means (32, 33) includes an eccentrically adjustable shaft (32).

- 5 -

8.    A linear actuator according to claim 1, including means (23) for adjusting said bias means (22) to the loads and speeds required of the pinion (10) and rack (12).

9.    A method for minimizing friction and wear between a rack (12) and a pinion (10), said method being characterized by the steps of supporting a follower (30) in a constant spaced relationship relative to the pinion (10), resiliently pivoting the pinion (10) in one direction into engagement with the teeth (11) of the rack (12) and concurrently maintaining the follower (30) spaced from a surface (34) of the rack (12) opposite the teeth (11), and permitting the follower (30) to move pivotally in the opposite direction into engagement with said surface (34), during relative movement of the pinion (10) and rack (12), to a position in which the pitch lines of said pinion (10) and rack (12) substantially coincide.

FIG. 1

FIG. 2

**European Patent Office**

**EUROPEAN SEARCH REPORT**

Application number

EP 83 10 7387

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-4 130 024 (T. HAYASAKA et al.) * Complete document * | 1-3 | F 16 H 19/00 |
| A | FR-A-1 265 570 (S.A. DES ENGRENAGES ET MACHINES MAAG) * Complete document * | 1-3,5-7 | |
| A | US-A-1 847 611 (F. HODGKINSON) * Complete document * | 1-3,8 | |
| A | US-A-3 449 977 (B. WILBUR) | | |
| | ----- | | |

| | TECHNICAL FIELDS SEARCHED (Int. Cl. ³) |
|---|---|
| | F 16 H 19/00 |
| | F 16 H 57/00 |
| | F 16 H 55/00 |

The present search report has been drawn up for all claims

| Place of search BERLIN | Date of completion of the search 12-10-1983 | Examiner LEMBLE Y.A.F.M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document